# EUROPÄISCHE PATENTSCHRIFT

(11) **EP 1 667 941 B1**
(45) Veröffentlichungstag und Bekanntmachung des Hinweises auf die Patenterteilung: **09.05.2007**
(21) Anmeldenummer: 04765709.3
(22) Anmeldetag: 30.09.2004
(51) Int. Cl.: C03C 21/00, A01N 59/16, C03C 3/087, C03C 10/00, C03C 12/00, A01N 25/34

(54) **ANTIMIKROBIELLE GLASOBERFLÄCHEN VON GLASPULVERN**
ANTIMICROBIAL GLASS SURFACES OF GLASS POWDERS
SURFACES EN VERRE ANTIMICROBIENNES DE POUDRES DE VERRE

(30) Priorität: 30.09.2003 DE 10345815
(43) Veröffentlichungstag der Anmeldung: 14.06.2006
(73) Patentinhaber: Schott AG, 55122 Mainz (DE)
(72) Erfinder: FECHNER, Jörg, Hinrich, 55118 Mainz (DE); ZIMMER, José, 55218 Ingelheim (DE); DRAPP, Bernd, 55126 Mainz (DE); THOMA, Frank, 65428 Rüsselsheim (DE)
(74) Vertreter: Sawodny, Michael-Wolfgang
(86) Internationale Anmeldenummer: PCT/EP2004/010923
(87) Internationale Veröffentlichungsnummer: WO 2005/033034

(56) Entgegenhaltungen:
- EP-A- 0 220 333
- EP-A- 1 170 264
- EP-A- 1 270 527
- EP-A- 1 449 816
- WO-A1-03/018495
- WO-A2-20/04076369
- DE-A- 10 309 826
- DE-A1- 10 017 701
- US-A1- 2002 001 604
- PATENT ABSTRACTS OF JAPAN Bd. 2000, Nr. 19, 5. Juni 2001 (2001-06-05) -& JP 2001 048595 A (INAX CORP), 20. Februar 2001 (2001-02-20)
- PATENT ABSTRACTS OF JAPAN Bd. 1996, Nr. 12, 26. Dezember 1996 (1996-12-26) -& JP 08 217492 A (SHINKO PANTEC CO LTD), 27. August 1996 (1996-08-27)
- PATENT ABSTRACTS OF JAPAN Bd. 1999, Nr. 08, 30. Juni 1999 (1999-06-30) -& JP 11 060277 A (NIPPON ELECTRIC GLASS CO LTD), 2. März 1999 (1999-03-02)
- PATENT ABSTRACTS OF JAPAN Bd. 2000, Nr. 01, 31. Januar 2000 (2000-01-31) -& JP 11 278866 A (NIHON YAMAMURA GLASS CO LTD), 12. Oktober 1999 (1999-10-12)
- PATENT ABSTRACTS OF JAPAN Bd. 1995, Nr. 05, 30. Juni 1995 (1995-06-30) -& JP 07 048142 A (NIPPON SHEET GLASS CO LTD), 21. Februar 1995 (1995-02-21)
- DI NUNZIO S ET AL: "Silver containing bioactive glasses prepared by molten salt ion-exchange" JOURNAL OF THE EUROPEAN CERAMIC SOCIETY, ELSEVIER SCIENCE PUBLISHERS, BARKING, ESSEX, GB, Bd. 24, Nr. 10-11, September 2004 (2004-09), Seiten 2935-2942, XP004504396 ISSN: 0955-2219
- PATENT ABSTRACTS OF JAPAN Bd. 1998, Nr. 11, 30. September 1998 (1998-09-30) -& JP 10 158037 A (ASAHI GLASS CO LTD), 16. Juni 1998 (1998-06-16)
- PATENT ABSTRACTS OF JAPAN Bd. 2000, Nr. 16, 8. Mai 2001 (2001-05-08) -& JP 2001 026466 A (NIPPON SHEET GLASS CO LTD), 30. Januar 2001 (2001-01-30)
- PATENT ABSTRACTS OF JAPAN Bd. 2000, Nr. 05, 14. September 2000 (2000-09-14) -& JP 2000 053451 A (SUMITOMO OSAKA CEMENT CO LTD), 22. Februar 2000 (2000-02-22)
- PATENT ABSTRACTS OF JAPAN Bd. 2000, Nr. 02, 29. Februar 2000 (2000-02-29) -& JP 11 319042 A (SASAKI GLASS CO LTD), 24. November 1999 (1999-11-24)
- PATENT ABSTRACTS OF JAPAN Bd. 1998, Nr. 08, 30. Juni 1998 (1998-06-30) -& JP 10 059788 A (TOKYO YOGYO CO LTD; TOYO TEKUNIKA KK), 3. März 1998 (1998-03-03)

## Beschreibung

Die Erfindung betrifft ein Verfahren zur Herstellung von antimikrobiellen Glasoberflächen von weitgehend inerten Glaspulvern und Glaskeramikpulvern.

Die antimikrobielle Wirkung von Silberionen ist gut bekannt und wird in unterschiedlichen Bereichen wie z. B. bei der Wasseraufbereitung (AgCl) oder im medizinischen Bereich eingesetzt. Silber wird hierbei für den Menschen als weitgehend unbedenklich eingestuft.

Silberhaltige Glaspulver werden z. B. in einer Reihe von Schriften als anorganische Biozide beschrieben. Hierbei handelt es sich in der Regel um Gläser mit geringer hydrolytischer Beständigkeit. Die Gläser neigen dazu sich zumindest teilweise in wässrigen Systemen aufzulösen oder aber sehr stark Ionen abzugeben.

So werden in US 5,290,544 wasserlösliche Gläser für die Anwendungen in kosmetischen Produkten mit sehr geringen SiO₂ und sehr hohen B₂O₃ bzw. hohen P₂O₅-Gehalten beschrieben. Die Gläser weisen Silberkonzentrationen größer 0,5 Gew-% auf. Diese Gläser besitzen eine extrem niedrige hydrolytische Beständigkeit und neigen dazu sich in Wasser komplett aufzulösen. Die hierbei frei werdenden Ag- und/oder Cu-lonen wirken antibakteriell.

Auch in JP-A-92178433A wird ein wasserlösliches Glaspulver mit SiO₂ < 37 Gew als Polymerzusatz mit hohen Silberkonzentrationen >1 Gew-% beschrieben.

In US 6,143,318 werden silberhaltige Phosphatgläser beschrieben, die als antimikrobielles Material für die Wundinfektionsbehandlung in Kombinationen mit Cu, Silber und Zn verwendet werden. Hierbei handelt es sich ebenfalls um wasserlösliche Gläser, die niedrige SiO₂-Konzentrationen und sehr hohen P₂O₅-Gehalte aufweisen.

Antimikrobielle silberhaltige Borosilikatgläser bzw. Borophosphatgläser werden in den Schriften JP 10218637, JP08245240, JP 07291654, JP 03146436 JP2000264674, JP2000203876 beschrieben.

Aus der WO 03/018495 sind wasserunlösliche Silikatglaspulver bekannt geworden, die eine antimikrobielle Wirkung aufweisen. Gemäß der WO 03/018495 wird unter dem Begriff wasserlöslich verstanden, dass ein Grundglas einer Glaszusammensetzung sich nicht in Wasser auflöst, sondern nur die Oberfläche reaktiv mit dem umgebenden Wasser Ionen austauscht.

Aus der DE 100 17 701, EP 1 170 264 sowie der EP 0 220 333 sind Zusammensetzungen und Herstellbedingungen für Glaskeramiken bekannt geworden. Der Offenbarungsgehalt dieser Schriften, insbesondere betreffend die Zusammensetzungen sowie die Herstellbedingungen werden vollumfänglich in den Offenbarungsgehalt der vorliegenden Anmeldung mitaufgenommen.
Die antimikrobielle Wirkung der aus der WO 03/018495 bekannten Gläser ist für manche Anwendungen, beispielsweise eine fungizide Wirkung in Kunststoffen, nicht ausreichend.

Auch gemahlenen Glaskeramikpulver der Zusammensetzungen in den oben genannten Schriften zeigen, wenn man diese Glaskeramiken zu Glaspulvern mahlt eine nicht ausreichende antimikrobielle Wirkung.

Aufgabe der Erfindung ist es daher, ein wasserunlösliches Glaspulver, insbesondere ein Silikatglaspulver sowie ein Glaskeramikpulver zur Verfügung zu stellen, das sich durch eine gegenüber herkömmlichen Glaskeramikpulvern und Silikatglaspulvern erhöhte antimikrobielle Wirkung auszeichnet sowie ein Verfahren zur Herstellung eines solchen Pulvers.

Erfindungsgemäß wird in einem ersten Aspekt die Aufgabe durch ein wasserlösliches, antimikrobielles Silikatglaspulver gelöst, wobei das Silikatglaspulver Glaspartikel mit nachfolgender Zusammensetzung in Gew.-% auf Oxidbasis aufweist:

| | |
|---|---|
| SiO₂ | 20-80 |
| Na₂O | 5-30 |
| K₂O | 0- 5 |
| P₂O₅ | 0-15 |
| B₂O₃ | 0-10 |
| CaO | 4-30 |
| MgO | 0-8 |
| Al₂O₃ | 0-7 |
| Fe₂O₃ | 0-2 |

sowie übliche Läutermittel in üblichen Mengen.

Erfindungsgemäß enthalten die Glaspartikel wenigstens eine antimikrobielle Komponente, ausgewählt aus den Komponenten ZnO, AgO, CuO, CeO₂, GeO₂, TeO₂, in den oberflächennahen Bereichen der Glaspartikeln. Dies bedeutet, dass dort diese antimikrobiellen Komponenten angereichert sind und ihre Konzentration an der Oberfläche viel größer ist, als im Innern der Glaspartikel.

Das Glas enthält SiO₂ als Netzwerkbildner, bevorzugt zwischen 35 bis 80 Gew.-%. Bei niedrigen Konzentrationen nimmt die hydrolytische Beständigkeit stark ab, so dass das Mahlen in wässrigen Medien nicht mehr ohne signifikante Auflösung des Glases gewährleistet ist. Bei höheren Werten kann die Kristallisationsstabilität abnehmen und die Verarbeitungstemperatur wird deutlich erhöht, so dass sich die Schmelz- und Heißformgebungseigenschaften verschlechtern.

Na₂O wird als Flussmittel beim Schmelzen des Glases eingesetzt. Bei Konzentrationen kleiner 5 % wird das Schmelzverhalten negativ beeinflusst. Außerdem wirkt der notwendige Mechanismus des Ionenaustausches nicht mehr hinreichend, um eine antimikrobielle Wirkung zu erzielen. Bei höheren Na₂O-Konzentrationen als 30 Gew.-% ist eine Verschlechterung der chemischen Resistenz bzw. hydrolytischen Beständigkeit, insbesondere in Verbindung mit einer Abnahme des SiO₂-Anteils, zu beobachten.

P₂O₅ ist ein Netzwerkbildner und kann die Kristallisationsstabilität erhöhen. Die Konzentrationen sollten nicht oberhalb von 15 Gew.-% liegen, da ansonsten die chemische Beständigkeit des Silikatglases zu stark abnimmt. P₂O₅ verbessert die Oberflächenreaktivität der Gläser.

Besonders bevorzugt sind Gläser, die bis auf Verunreinigungen frei von P₂O₅ sind. Diese Gläser zeichnen sich durch eine besonders hohe Beständigkeit aus.

CaO verbessert die chemische Beständigkeit, insbesondere im leicht alkalischen Bereich und ist daher notwendig, um eine Auflösung des Glases in wässrigen Medien zu verhindern.

K₂O-Zugaben begünstigen die Austauschbarkeit des Natriums bzw. Kalium kann selber gegen H+-lonen ausgetauscht werden.

Die Menge an Al₂O₃ kann zur Erhöhung der chemischen Beständigkeit der Kristallisationsstabilität bis zu maximal 8 Gew.-% hinzugegeben werden. ZnO ist eine wesentliche Komponente für die Heißformgebungseigenschaften des Glases. Es verbessert die Kristallisationsstabilität und erhöht die Oberflächenspannung. Außerdem kann es den antimikrobiellen Effekt unterstützen. Bei geringen SiO₂-Gehalten erhöht es die Kristallisationsstabifität.

Um die antimikrobielle Wirkung des schwach antimikrobiellen Grundglases oder der Glaskeramik zu erhöhen, ist erfindungsgemäß vorgesehen, nach Herstellung von Partikeln des Grundglases oder der Glaskeramik, diese Glaspartikel oder Glaskeramikpartikel mit antimikrobiellen Ionen, beispielsweise den Ionen Ag, Cu, Ce, Ge, Te, Zn in einem separaten Verfahrensschritt antimikrobiell auszurüsten.

Durch die nachträgliche Ausrüstung mit antimikrobiellen Ionen zeigt die Oberfläche der so ausgerüsteten Glas- oder Glaskeramikpartikel gegenüber Bakterien, Pilzen sowie Viren eine biozide, auf jeden Fall eine biostatische Wirkung. Gegenüber höheren Lebewesen treten keinerlei schädigende Wirkungen auf. Die mit einer antimikrobiellen Oberfläche gemäß der Erfindung versehenen Glaspartikel oder Glaskeramikpartikel sind insbesondere im Lebensmittelbereich, Medizinbereich, Haushaltsbereich einsetzbar.

Die Herstellung einer antimikrobiellen Oberfläche der Glas- oder Glaskeramikpartikel kann in einer ersten Ausführungsform der Erfindung mittels lonenaustausch in Salzbädern erfolgen.

Bei Gläsern oder Glaskeramiken, die Alkalien oder aber auch Erdalkalien enthalten sind, können durch lonenaustausch in flüssigen Salzbädern bei Temperaturen beginnend bei der Schmelztemperatur der Salzbäder bis nahe Tg antimikrobiell wirkende Ionen wie Ag, Cu, Zn, Sn in die Oberfläche der Glaspartikel oder Glaskeramikpartikel eindiffundiert werden.

Bei alkalifreien Gläsern oder Glaskaramiken können auch einfache Diffusionsprozesse zur Einlagerung in der Oberfläche führen. Dies führt überraschender Weise ebenfalls zu hinreichend antimikrobiellen Oberflächen.

Durch unterschiedliche Temperaturzyklen können unterschiedliche Tiefenverteilungen der antimikrobiellen lonen eingestellt werden.

Auch durch Rücktausch in Salzbädern ohne antimikrobielle lonen, z. B. Na-Nitrat können spezifische Wirkungen hinsichtlich Langzeitwirkung und -stärke erreicht werden.

Durch Temperungen nach dem lonenaustausch können die antimikrobiellen Metallionen von der Oberfläche in das Innere des Glases diffundieren und sozusagen "vergraben" werden.

Die antimikrobielle Wirkung kann mit Farbwirkungen durch z. B. Silberkolloide oder ionische Absorption ergänzt werden.

Für bevorzugte Anwendungen wird der Prozess so geführt, dass keine Verfärbung des Glases stattfindet und eine möglichst große Transmission, bevorzugt im sichtbaren Wellenlängenbereich gewährleistet bleibt.

Spannungen durch unterschiedliche thermische Dehnung des ionenausgetauschten und des nicht ausgetauschten Glas können auftreten. Dies kann in einer vorteilhaften Ausführungsform genutzt werden um z. B. ein chemisch vorgespanntes Glas mit einer antimikrobiellen Oberfläche zu erhalten.

Um hinreichende antimikrobielle Effekte zu erzielen sind bei den erfindungsgemäßen lonenaustauschverfahren sehr kurze Behandlungszeiten hinreichend. Die Behandlungszeiten können unter 60 min, unter 10 min oder unter 5 min liegen.

Auch die Behandlungstemperaturen können im Fall der Schmelzbäder zwischen Temperaturen von 50°C oberhalb von Tg der Gläser bis hinunter zu den Schmelztemperaturen der Salzbäder erfolgen.

Neben Schmelzbädern können auch Schmelzpasten, beispielsweise AgCl-AgNO₃ und/oder ZnCl, und/oder ZnNO₃-haltige Pasten aufgetragen oder eingebrannt werden. Aufgetragene Pasten können nach der Temperung problemlos abgebürstet werden.

Durch geeignetes Schmelzen und Temperaturführung kann z. B. an der Oberfläche eine Austauschrate von bis nahezu 100 % erreicht werden.

In einer alternativen Ausgestaltung der Erfindung können statt einer Oberflächenreaktion mit Salzschmelzen auch temperaturgesteuerte Oberflächenreaktionen mit anorganischen oder organischen antimikrobiellen Metallverbindungen direkt oder in Lösungen oder Suspensionen durchgeführt werden.

Die durch die mit Hilfe der vorgenannten Verfahren mit einer antimikrobiellen, insbesondere auch biozid ausgerüsteten Oberfläche versehenen Glas- oder Glaskeramikpulver können Glas- oder Glaskeramikpulver mit Partikelgrößen unter 1 um bis hin zu Glaskügelchen mit mehreren Millimeter Durchmesser aufweisen.

Durch unterschiedliche Temperaturbehandlungen, beispielsweise Temperaturzyklen, können unterschiedliche Tiefenprofile, d. h. Tiefenverteilungen der antimikrobiellen Ionen eingestellt werden.

Entsprechend behandelte Pulver können in Fall-, Rohr- oder Batchöfem kontinuierlich oder diskontinuierlich hergestellt werden

Alternativ kann eine antimikrobielle Ausführung des Glas- oder Glaskeramikpulvers mit Hilfe von Suspensionen erfolgen. Die eingesetzten Suspensionen können hierbei auch Festkörperpartikel wie antimikrobielle Gläser oder Keramiken enthalten, die im thermischen Prozess aufgesintert werden und bei genügend hoher Konzentration eine kompakte Oberflächenschicht ausbilden können.

Nanopartikel von z. B. TiO₂, ZnO, CeO₂ in der Suspension, die zur antimikrobiellen Ausrüstung verwandt wird, können ebenfalls enthalten sein. Bevorzugt sind beispielsweise TiO₂-Partikel zur Erzielung einer photokatalytisch aktiven Oberfläche, von der eine antimikrobielle Wirkung ausgeht. Auch bei Verwendung von ZnO-Nanopartikeln wird eine antimikrobielle Oberfläche erhalten.

Das Einbrennen der Schicht auf die Glaspulver kann durch herkömmliches Tempern in widerstands- oder gasbeheizten Öfen oder mit IR-Strahlungsheizung oder mit Hilfe von Laserstrahlung (z. B. CO₂-Laser, Neodym YAG-Laser) erfolgen. Die Laserwellenlängen und Leistungen müssen entsprechend geeignet ausgewählt werden.

Neben dem Aufbringen der Metallverbindungen in Schmelzen, Lösungen und Suspensionen können auch Polymere z. B in Form von Folien auf die Oberfläche der Glaspartikel oder Glaskeramikpartikel gebracht werden und dann durch thermische Aktivierung z. B. mittels Lasern, z. B. CO₂-Laser, falls notwendig auch ortsaufgelöst die Metallionen eindiffundiert und gegebenenfalls auch reduziert werden.

Mittels Laser oder anderen Strukturierungverfahren können auch definierte antimikrobielle Strukturen auf die Oberflächen aufgebracht werden. Diese können z. B. im Bereich der Biotechnologie eingesetzt werden.

Mit den erfindungsgemäßen Verfahren können wie zuvor beschrieben auch die Oberflächen von Glaskeramikpulvern mit einer antimikrobiellen Wirkung versehen werden.

Die Glaskeramikpulver können sowohl vor als auch nach der Keramisierung den Prozess zur antimikrobiellen Ausrüstung durchlaufen.

Als Glaskeramiken sind besonders bevorzugt solche, wie in der DE 100 17 701, der EP 1 170 264 oder der EP 0 220 333 beschrieben.

Insbesondere ist die Erfindung ohne Beschränkung hierauf für ein Glaskeramikpulver geeignet, wobei das Ausgangsglas die nachfolgende Zusammensetzung umfasst (in Gew-% auf Oxidbasis):

| | |
|---|---|
| SiO₂ | 55-69 |
| Al₂O₃ | 19-25 |
| P₂O₅ | 0-1,0 |
| TiO₂ | 1,0-5,0 |
| ZrO₂ | 0,5-2,5 |
| Li₂O | 3,0-4,0 |
| Na₂O | 0-1,0 |
| K₂O | 0-0,6 |
| Σ Na₂O + K₂O | 0,2-1,0 |
| Mg0 | 0-1,5 |
| CaO | 0-0,5 |
| SrO | 0-1,0 |
| BaO | 0-2,5 |
| Σ CaO + SrO + BaO | 0,2-3,0 |
| ZnO | 1,0-2,2 |

sowie gegebenenfalls Läutermittel wie As₂O₃, Sb₂O₃, SnO₂, CeO₂ und/oder Sulfat bzw. Chlorid Verbindungen in üblichen Mengen.

Ganz besonders bevorzugt sind Ausgangsglaszusammensetzungen in nachfolgendem Zusammensetzungsbereich:

| | |
|---|---|
| SiO₂ | 66-68 |
| Al₂O₃ | 19-25 |
| TiO₂ | 2,0-3,0 |
| ZrO₂ | 1,0-2,5 |
| Li₂O | 3,0-4,0 |
| Na₂O | 0-1,0 |
| K₂O | 0-0,6 |
| Σ Na₂O + K₂O | 0,2-1,0 |
| Mg0 | 0-1,5 |
| CaO | 0-0,5 |
| SrO | 0-1,0 |
| BaO | 0-1,0 |
| ZnO | 0-2,0 |

Durch Temperung bei 1000-1100°C für eine Haltezeit von 30-10 Minuten wird das kristallisierbare Glassystem Li₂O-Al₂O₃-SiO₂, das vorzugsweise die oben angegebenen Zusammensetzung aufweist nach Herstellung eine Glasblockes zu einer Glaskeramik keramisiert.

Der keramisierte Glaskeramikblock wird z. B. mit einer antimikrobiellen Lösung gemahlen und das so erhaltene Glaskeramikpulver damit antimikrobielle ausgerüstet, wie unten anhand der Ausführungsbeispiele für Silicatgläser beschrieben.

Auf die Glas- oder Glaskeramikpartikel kann die in antimikrobiellen Ionen enthaltene Lösung auch aufgesprüht, gewalzt oder gedruckt werden.

Die in den Schmelzen, Lösungen und Suspensionen enthaltenen Zusammensetzungen, die Träger von Ag, Zn oder Cu sind, können beispielsweise sein:
Ag-Chlorid
Ag-Nitrat
Ag-Oxid
Ag
Ag-organische Verbindungen
Ag-anorganische Verbindungen

Cu-Oxid
Zn-Oxid
Zn-Nitrat
Zn-Chlorid
Cu-, Zn-organische Verbindungen
Cu-, Zn-anorganische Verbindungen
sowie sämtliche andere Verbindungen, umfassend insbesondere alle Salze von antimikrobiell wirksamen Ionen, wie z. B. Ag, Cu, Zn, Sn, die bei Raumtemperatur bzw. bis zur Temperatur der Temperung oder in der aufgebrachten Lösung bzw. Suspension stabil sind.

Auch sind Kombinationen der antimikrobiellen Substanzen möglich.

Zinkverbindungen weisen gegenüber Ag-Verbindungen den Vorteil auf, dass sie nicht zu einer signifikanten Verfärbung der Glasoberflächen führen.

Unter Glas- oder Glaskeramikpartikeln werden Kugeln, Fasern, Granulat, Flakes etc. verstanden.

Bevorzugt kann die antimikrobielle Ausrüstung einer im Prinzip inerten Glasmasse auch beim Mischen bzw. Mahlen der Glasmasse zu Glaspartikeln erfolgen, beispielsweise indem man die im Wesentlichen inerte Glasmasse eines wasserunlöslichen Silikatglases nach dem Schmelzen in einer entsprechenden Lösung oder Suspension, z. B. in einer wässrigen Silbernitratlösung, mahlt und anschließend trocknet oder brennt, so dass eine mehr oder weniger feste Verbindung zwischen antimikrobiellen Substanzen und dem Trägerglas gebildet wird.

Bei Glaskeramiken kann eine antimikrobielle Ausrüstung ebenfalls dann erfolgen, wenn man den Glaskeramikblock zu Glaskeramikpulver mahlt bzw. mischt.

Das Trocknen kann z. B. in Form von Gefrier-, Mikrowellen- oder Ofentrocknung durchgeführt werden. Das Brennen kann z. B. kontinuierlich oder diskontinuierlich in Fallöfen, Gasöfen, Kammeröfen, Drehrohröfen, Mikrowellenöfen, Strahlungsöfen erfolgen.

### Ausführungsbeispiele

Nachfolgend soll die Erfindung anhand der Ausführungsbeispiele beschrieben werden.

In Tabelle 1 ist ein Beispiel für eine Glaszusammensetzung angegeben, die mit einer antimikrobiellen Oberfläche durch Ionenaustausch in der Lösung ausgerüstet wird.

**Tabelle 1:**

| | Ausf 1 |
|---|---|
| SiO₂ | 71,2 |
| Al₂O₃ | 0,35 |
| CaO | 9,6 |
| MgO | 4,0 |
| Fe₂O₃ | 0,1 |
| Na₂O | 14,1 |
| K₂O | 0,05 |

Bei dem in Tabelle angegebenen Glas handelt es sich um ein Kalknatronglas, das die in Tabelle 1 angegebene Zusammensetzung in Gew.-% aufweist.

Das in Tabelle 1 angegebene Glas wurde einmal in einer inerten Lösung, d. h. in Wasser, aufgemahlen. Dieses Glaspulver diente hinsichtlich der antimikrobiellen Aktivität als Vergleichsprobe.

Um die erhöhte antimikrobielle Wirkung durch die erfindungsgemäße antimikrobielle Ausrüstung nachzuweisen, wurde das Glas aus Tabelle 1 zum einen in einer Zinknitratlösung gemahlen und in einer weiteren Ausgestaltung in einer Silbemitratlösung.

Zunächst soll die Herstellung einer antimikrobiellen Ausrüstung mit Zink-Ionen beschrieben werden.

Hierzu wurden 200 g eines Glases gemäß Tabelle 1 in 100 g einer 5 %igen Zn(NO₃)₂-Lösung gegeben und für zwei Stunden in einem kleinen Mahlbehälter gemahlen bzw. gemischt.

Sodann wurde die erhaltene Lösung mit den Glaspartikeln für 19 Stunden im Kühlofen bei 100°C getrocknet.

Die vorgetrocknete Probe wurde dann für 100 min bei 240°C gesintert, so dass die Zn-Ionen in die Oberfläche der Glasteilchen mit Alkaliionen austauschen bzw. eindiffundieren können.

Tabellarisch ist die Verfahrensführung in nachfolgender Tabelle 2 zusammengefasst.

Die mit einer antimikrobiellen Oberfläche umfassend Zn-Ionen ausgerüsteten Glaspartikel sind als Probe C gekennzeichnet.

Neben der Ausrüstung mit Zn wurden auch Glaspartikel mit Ag antimikrobiell ausgerüstet. Die Verfahrensführung hierfür ist in Tabelle 3 angegeben.

Hierfür wurde ein weitgehend inertes Glas mit einer Zusammensetzung gemäß Ausführungsbeispiel 1 in Tabelle 1 nach dem Schmelzen in einer AgNO₃-Lösung gemahlen. Hierbei wurde eine Masse von 200 g des Glaspulvers zu 100 g 5%iger AgNO₃-Lösung gegeben und für zwei Stunden gemahlen. Dies betrifft Probe D. In Probe E wurden 200 g einer Glasmasse gemäß Tabelle 1, Ausgangsbeispiel 1, mit 10 g 5 %iger AgNO₃-Lösung für zwei Stunden gemahlen. Bei Probe F wurden 200 g Glasmasse gemäß Ausführungsbeispiel 1 in Tabelle 1 zu 100 g 0,5 %iger AgNO₃-Lösung gegeben und für zwei Stunden gemahlen.

Bei Probe G wurden 200 g einer Glasmasse der Zusammensetzung gemäß Tabelle 1, Ausführungsbeispiel 1 zu 10 g einer 0,5 %igen AgNO₃-Lösung gegeben und für zwei Stunden gemahlen.

Bei allen Proben D, E, F sowie G wurde nach dem Mahlen die Lösung umfassend die gemahlenen Glaspartikel für 19 Stunden bei 100°C vorgetrocknet, so dass im Wesentlichen das wässrige Lösungsmittel verdampfen konnte und daran anschließend für 100 min bei 240°C getrocknet bzw. gesintert.

In der Tabelle 4 geht die antimikrobielle Wirkung der unterschiedlichen Proben hervor.

Hierbei wurde die keimtötende Wirkung des Glaspulvers in unterschiedlichen Zusammensetzungen bei den Bakterien Escherichia coli, Pseudomonas aeruginosa, Staphylococcus aureus, Candida albicans, Aspergillus niger untersucht.

Der Startwert bei 0 Stunden bezeichnet für sämtlichen Proben die Anzahl der Bakterien, die in das Nährmedium anfänglich hineingegeben wurden. Die Werte bei 48 Stunden, 7 Tagen, 14 Tagen, 21 Tagen, 28 Tagen bezeichnen die Anzahl der Keime, die nach Zugabe des Silicatglaspulvers in einer Konzentration von 1 Gew.-% zur Nährlösung für die Probe A und 0,1 Gew.-% Glaspulver zur Nährlösung der Probe B aufgefunden wurden. Die Proben A und B beschreiben Silicatglaspulver, die nicht nachträglich antimikrobiell ausgerüstet wurden. Diese Proben stellen die Vergleichsproben dar. Wie aus Tabelle 4 hervorgeht, zeigen die Vergleichsproben nur eine schwache antimikrobielle Wirkung.

Durch die nachträgliche Ausrüstung mit Zn oder Ag-lonen wird die antimikrobielle Wirksamkeit wie nachfolgend beschrieben erhöht.

Der mittlere Partikeldurchmesser sämtlicher in Tabelle 4 angegebener Glaspulver betrug 4 µm.

Die Proben C.1 und C.2 bezeichnen Glaspulver, die mit einer Zn(NO₃)₂-Lösung gemäß Tabelle 2 Probe C behandelt wurden und in einer Konzentration von 1 Gew.-% für die Probe C.1 in eine Nährlösung gegeben wurden. Wie deutlich zu erkennen, wird für die Bakterien Escherichia coli, Pseudomonas aeruginosa, Staphylococcus aureus eine antimikrobielle Wirkung festgestellt, da diese Bakterien nach 14 Tagen vollständig abgetötet waren, ergebend in der entsprechenden Tabelle einen Wert von 0.

Gibt man nur 0,1 Gew.-% eines Glaspulvers, das gemäß Probe 4 in Tabelle 2 mit dem antimikrobiellen Ion Zink ausgerüstet wurde, in die Nährlösung, so ist der antimikrobielle Effekt etwas schwächer, für die Bakterien Escherichia coli und Pseudomonas aeruginosa wird jedoch ebenfalls eine vollständige Keimabtötung, ergebend einen Wert von 0 in Tabelle 4 erreicht.

Wie aus Tabelle 4 für die Proben D.1 und D.2 hervorgeht, kann durch die Ausrüstung von weitgehend inerten Glaspulvern mit Ag-lonen eine sehr starke keimabtötende Wirkung erreicht werden.

Probe D.1 beschreibt ein gemäß Tabelle 3, Probe D in einer 5 %igen AgNO₃-Lösung ausgerüstetes Glaspulver. Dieses Glaspulver gemäß Probe D wurde in einer Konzentration von 0,1 Gew.-% in eine Nährlösung umfassend die Bakterien Escherichia coli, Pseudomonas aeruginosa, Staphylococcus aureus, Candida albicans, Aspergillus niger gegeben.

Wie aus Tabelle 4 zu entnehmen, wird bereits bei einer geringen Konzentration von nur 0,1 Gew.-% des antimikrobiellen Glaspulvers gemäß Probe D eine Keimabtötung für die Bakterien Escherichia coli, Pseudomonas aeruginosa, Staphylococcus aureus nach 7 Tagen erreicht. Gibt man Probe D in einer Konzentration von 1,0 Gew.-% der Nährlösung zu, so kann die keimabtötende Wirkung bereits nach 48 Stunden für alle untersuchten Bakterien nachgewiesen werden.

Durch die Erfindung ist es erstmals möglich, sehr kostengünstig und in großer Menge herzustellende Kalknatrongläser, die zur Klasse der wasserunlöslichen Silikatgläser zählen, mit einer erhöhten antimikrobiellen Wirkung auszurüsten. Durch die nachträgliche antimikrobielle Ausrüstung ist es möglich, durch entsprechende Wahl der Konzentrationen, der Vortrocken- und der Temperbedingungen, die antimikrobielle Wirkung eines Glaspulvers gezielt einzustellen.

**Tabelle 2: Bedingungen für ein mit Zn-lonen ausgerüstetes Glaspulver gemäß Tabelle 1**

| Probe | Glaspulver | | Zn(NO₃)₂-Lösung | | mischen/ mahlen | vortrocknen | | Tempern | |
|---|---|---|---|---|---|---|---|---|---|
| | Glas-Typ | Masse | Konz. | Masse | Zeit | Zeit | Temp. | Dauer | Temp. |
| C | Ausf.1 | 200g | 5% | 100g | 2h | 19h | 100°C | 100min | 240°C |

**Tabelle 3: Bedingungen für ein mit Ag-Ionen ausgerüstetes Glaspulver gemäß Tabelle 1**

| Probe | Glaspulver | | Ag(No₃)-Lösung | | mischen/ mahlen | vortrocknen | | Tempern | |
|---|---|---|---|---|---|---|---|---|---|
| | Glas-Typ | Masse | Konz . | Masse | Zeit | Zeit | Temp. | Dauer | Temp. |
| D | Ausf.1 | 200g | 5% | 100g | 2h | 19h | 100°C | 100min | 240°C |
| E | Ausf.1 | 200g | 5% | 10g | 2h | 19h | 100°C | 100min | 240°C |
| F | Ausf.1 | 200g | 0,5% | 100g | 2h | 19h | 100°C | 100min | 240°C |
| G | Ausf.1 | 200g | 0,5% | 10g | 2h | 19h | 100°C | 100min | 240°C |

**Tabelle 4: Keimtötende Wirkung verschiedener Glaspulverproben in Nährlösung enthaltend Keime**

| **Probe A:** | | | | | |
|---|---|---|---|---|---|
| mittlerer Teilchendurchmesser des Glaspulvers: 4 µm, Konzentration des Glaspulvers in wässriger Lösung: 1 Gew.-% Pulver in wässriger Keimlösung, Vergleichsprobe ohne Silber | | | | | |
| | Escherichia coli | Pseudomonas aeruginosa | Staphylococcus aureus | Candida albicans | Aspergillus niger |
| 0h | 280 000 | 320 000 | 350 000 | 290 000 | 280 000 |
| 48h | 500+ | 64,000 + | 700 + | 118,000 + | 160,000 + |
| 7 | | | | | |
| Tage | <100+ | 2,000 + | <100+ | 80,000 + | 120,000 + |
| 14 | | | | | |
| Tage | 0- | 0- | 0- | 80,000 + | 120,000 + |
| 21 | | | | | |
| Tage | 0- | 0- | 0- | 80,000 + | 160,000 + |
| 28 | | | | | |
| Tage | 0 - | 0 - | 0 - | 72,000 + | 140,000 + |

| **Probe B:** | | | | | |
|---|---|---|---|---|---|
| Mittlerer Teilchendurchmesser des Glaspulvers: 4 µm, Konzentration des Glaspulvers in wässriger Lösung: 0,1 Gew.-% Pulver in wässriger Keimlösung, Vergleichsprobe ohne Silber | | | | | |
| | Escherichia coli | Pseudomonas aeruginosa | Staphylococcus aureus | Candida albicans | Aspergillus niger |
| 0h | 280 000 | 320 000 | 350 000 | 290 000 | 280 000 |
| 48h | 50,000 + | 145,000 + | 26,000 + | 327,000 + | 280,000 + |
| 7 | | | | | |
| Tage | < 1 mill. + | 136,000 + | 1000 + | 182,000 + | 300,000 + |
| 14 | | | | | |
| Tage | < 1 mill. + | 218,000 + | 100 + | 100,000 + | 300,000 + |
| 21 | | | | | |
| Tage | 5 mill. + | 227,000 + | < 100 + | 54,000 + | 400,000 + |
| 28 | | | | | |
| Tage | 9 mill. + | 309,000 + | 0 - | 48,000 + | 400,000 + |

| **Probe C.1 :** | | | | | |
|---|---|---|---|---|---|
| Mittlerer Teilchendurchmesser des Glaspulvers: 4 µm, Konzentration des Glaspulvers: 1,0 Gew.-% Pulver in wässriger Keimlösung, Probe mit Zink-Ionen gemäß Tabelle 2 | | | | | |
| | Escherichia coli | Pseudomonas aeruginosa | Staphylococcus aureus | Candida albicans | Aspergillus niger |
| 0h | 280 000 | 320 000 | 350 000 | 290 000 | 280 000 |
| 48h | < 100 + | < 100 + | < 100 + | 500 + | 100,000 + |
| 7 | | | | | |
| Tage | 0- | 0- | <100+ | <100+ | 80,000 + |
| 14 | | | | | |
| Tage | 0 - | 0 - | 0 - | 400 + | 26,000 + |
| 21 | | | | | |
| Tage | 0 - | 0 - | 0 - | 100 + | 26,000 + |
| 28 | | | | | |
| Tage | 0- | 0- | 0- | < 100 + | 18,000 + |

| **Probe C.2** | | | | | |
|---|---|---|---|---|---|
| Mittlerer Teilchendurchmesser des Glaspulvers: 4 µm, Konzentration des Glaspulvers in wässriger Keimlösung: 0,1 Gew.-%, Probe mit Zink-Ionen gemäß Tabelle 2 | | | | | |
| | Escherichia coli | Pseudomonas aeruginosa | Staphylococcus aureus | Candida albicans | Aspergillus niger |
| 0h | 280 000 | 320 000 | 350 000 | 290 000 | 280 000 |
| 48h | 0 - | < 100 + | < 100 + | 127,000 + | 140,000 + |
| 7 | | | | | |
| Tage | 0- | 0- | < 100 + | 119,000+ | 100,000+ |
| 14 | | | | | |
| Tage | 0- | 0- | < 100 + | 31,000 + | 80,000 + |
| 21 | | | | | |
| Tage | 0 - | 0 - | < 100 + | 25,000 + | 70,000 + |
| 28 | | | | | |
| Tage | 0- | 0- | <100+ | 1.6 mill. + | 100,000 + |

| **Probe D.1 :** | | | | | |
|---|---|---|---|---|---|
| Mittlerer Teilchendurchmesser des Glaspulvers: 4 µm, Konzentration des Glaspulvers in wässriger Keimlösung: 1,0 Gew.-%, Probe mit Silber-Ionen gemäß Tabelle 3 | | | | | |
| | Escherichia coli | Pseudomonas aeruginosa | Staphylococcus aureus | Candida albicans | Aspergillus niger |
| 0h | 280 000 | 320 000 | 350 000 | 290 000 | 280 000 |
| 48h | 0- | 0- | < 100 + | < 100 + | 80,000 + |
| 7 | | | | | |
| Tage | 0 - | 0 - | 0 - | 2900 + | 40,000 + |
| 14 | | | | | |
| Tage | 0- | 0- | 0- | 100 + | 26,000 + |
| 21 | | | | | |
| Tage | 0 - | 0 - | 0 - | 200 + | 26,000 + |
| 28 | | | | | |
| Tage | 0 - | 0 - | 0 - | 200 + | 30,000 + |

| **Probe D.2** | | | | | |
|---|---|---|---|---|---|
| Mittlerer Teilchendurchmesser des Glaspulvers: 4 µm, Konzentration des Glaspulvers in wässriger Keimlösung: 0,1 Gew.-%, Probe mit Silber-Ionen gemäß Tabelle 3 | | | | | |
| | Escherichia coli | Pseudomonas aeruginosa | Staphylococcus aureus | Candida albicans | Aspergillus niger |
| 0h | 280 000 | 320 000 | 350 000 | 290 000 | 280 000 |
| 48h | 0- | 0- | 0- | 0- | 0- |
| 7 | | | | | |
| Tage | 0- | 0- | 0- | 0- | 0- |
| 14 | | | | | |
| Tage | 0- | 0- | 0- | 0- | 0- |
| 21 | | | | | |
| Tage | 0- | 0- | 0- | 0- | 0- |
| 28 | | | | | |
| Tage | 0- | 0- | 0- | 0- | 0- |

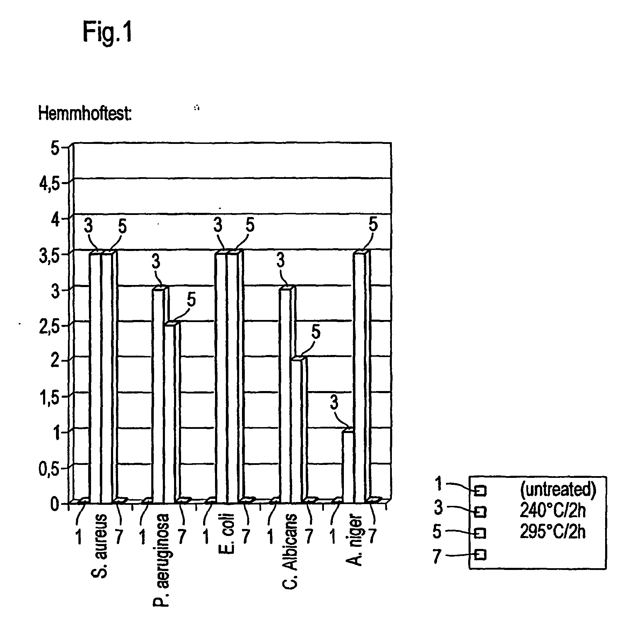

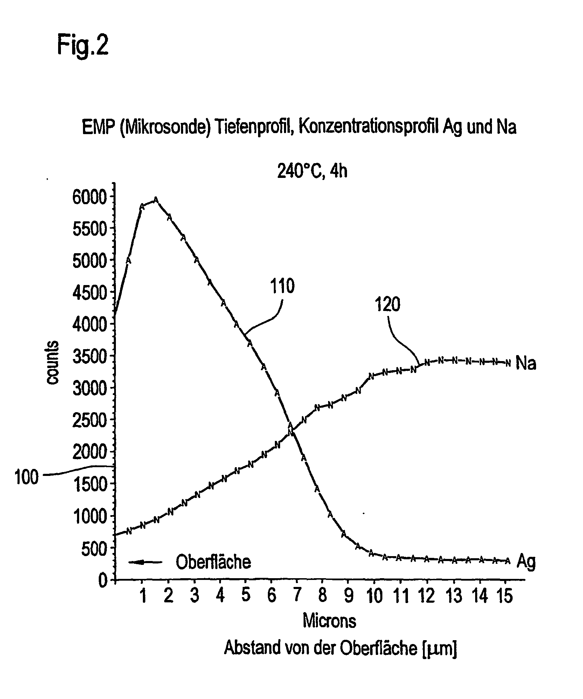

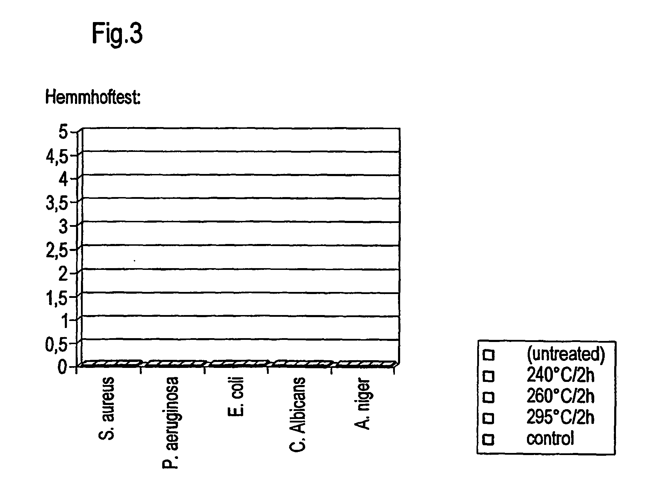

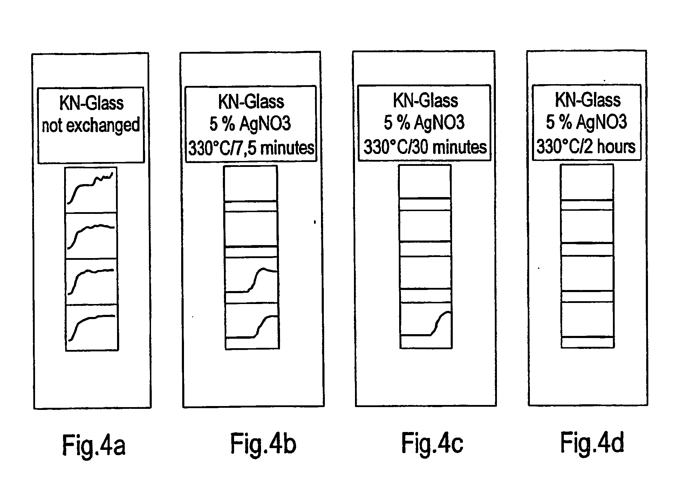

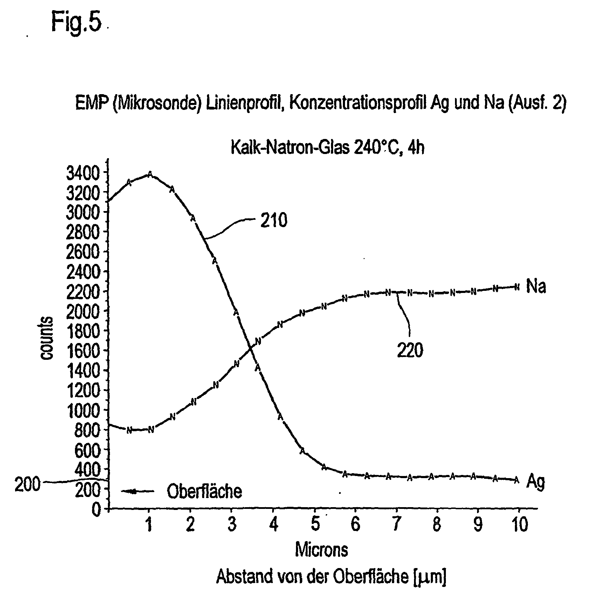

## Patentansprüche

1. Wasserunlösliches Silikatglaspulver, wobei das Silikatglaspulver Glaspartikel mit nachfolgender Zusammensetzung in Gew.-% auf Oxidbasis aufweist:
| | |
|---|---|
| SiO₂ | 20-80 |
| Na₂O | 5-30 |
| K₂O | 0- 5 |
| P₂O₅ | 0-15 |
| B₂O₃ | 0-10 |
| CaO | 4-30 |
| MgO | 0-8 |
| Al₂O₃ | 0-7 |
| Fe₂O₃ | 0-2 |
sowie übliche Läutermittel in üblichen Mengen,
**dadurch gekennzeichnet, dass**
die Glaspartikel wenigstens eine der nachfolgenden Komponenten
ZnO
AgO
CuO
CeO₂
GeO₂
TeO₂
enthalten, wobei diese Komponenten in den oberflächennahen Bereichen der Glaspartikel angereichert sind.

2. Wasserunlösliches, antimikrobielles Silikatglaspulver gemäß Anspruch 1, **dadurch gekennzeichnet, dass** die oberflächennahen Bereiche die Komponenten in einer Konzentration > 100 ppm und < 8 Gew.-% enthalten.

3. Wasserunlösliches antimikrobielles Silikatglaspulver gemäß einem der Ansprüche 1 bis 2, **dadurch gekennzeichnet, dass** die Zusammensetzung in Gew.-% auf Oxidbasis aufweist:
| | |
|---|---|
| SiO₂ | 38-65 |
| Na₂O | 10-30 |
| P₂O₅ | 4-15 |
| B₂O₃ | 0-3 |
| CaO | 10-30 |

4. Wasserunlösliches antimikrobielles Silikatglaspulver gemäß einem der Ansprüche 1 bis 2,
**dadurch gekennzeichnet, dass**
die Zusammensetzung in Gew.-% auf Oxidbasis aufweist:
| | |
|---|---|
| SiO₂ | 50-80 |
| Al₂O₃ | 0-1 |
| CaO | 4-15 |
| MgO | 0-8 |
| Fe₂O₃ | 0-2 |
| Na₂O | 5-20 |
| K₂O | 0-2 |

5. Wasserunlösliches, antimikrobielles Silikatglaspulver gemäß einem der Ansprüche 1 bis 4, **dadurch gekennzeichnet, dass** die Größe der Partikel des Glaspulvers < 100 µm, < 50 µm, < 20 µm, vorzugsweise < 5 µm, besonders bevorzugt < 2 µm ist.

6. Wasserunlösliches, antimikrobielles Silikatglaspulver nach Anspruch 5, **dadurch gekennzeichnet, dass** Partikel mit einer Größe < 5 µm durch Attrio-Mahlung des Glases in Wasser erhalten werden können.

7. Verfahren zur Herstellung von wasserunlöslichen antimikrobiellen Silikatglaspulvern umfassend die nachfolgenden Schritte:
ein Silikatglas mit nachfolgender Zusammensetzung in Gew.-% auf Oxidbasis:
| | |
|---|---|
| SiO₂ | 20-80 |
| Na₂0 | 5-30 |
| K₂O | 0- 5 |
| P₂O₅ | 0-15 |
| B₂O₃ | 0-10 |
| CaO | 4-30 |
| MgO | 0-8 |
| Al₂O₃ | 0-7 |
| Fe₂O₃ | 0-2 |
sowie übliche Läutermittel in üblichen Mengen wird erschmolzen, danach wird das Silikatglas zu Glaspartikeln zerkleinert,
die Glaspartikel werden mit einer oder mehrerer der nachfolgenden Ionen
Zn
Ag
Cu
Ce
Ge
Te
durch einen oder mehrere nachfolgende Verfahrensschritte
- lonenaustausch in Salzbädern
- Aufbringen von metallhaltigen Lösungen und Suspensionen
- Einbrennen von salzhaltigen Pasten antimikrobiell ausgerüstet.
- Einbrennen von metallhaltigen Lösungen und Suspensionen
- Zerkleinern des Silikatglases zu Glaspartikeln in metallhaltigen, insbesondere wässrigen Lösungen und Suspensionen
antimikrobiell ausgerüstet.

8. Verfahren nach Anspruch 7, **dadurch gekennzeichnet, dass**
die in den Schmelzen, Lösungen und Suspensionen enthaltenen Zusammensetzungen, die Träger von Ag, Zn oder Cu sind, eine oder mehrere der nachfolgenden Verbindungen umfassen:
Ag-Chlorid
Ag-Nitrat
Ag-Oxid
Ag
Ag-organische Verbindungen
Ag-anorganische Verbindungen
Cu-Oxid
Zn-Oxid
Zn-Nitrat
Zn-Chlorid
Cu-, Zn-organische Verbindungen
Cu-, Zn-anorganische Verbindungen
sowie sämtliche andere Verbindungen, umfassend insbesondere alle Salze von antimikrobiell wirksamen lonen, wie z. B. Ag, Cu, Zn, Sn, die bei Raumtemperatur bzw. bis zur Temperatur der Temperung oder in der aufgebrachten Lösung bzw. Suspension stabil sind.

9. Verfahren nach Anspruch 8, **dadurch gekennzeichnet, dass** eine oder mehrere der nachfolgenden Ionen Zn, Ag, Cu, Ce, Ge, in den oberflächennahen Bereichen der Glaspartikel angereichert sind.

10. Verfahren gemäß einem der Ansprüche 8 bis 9, **dadurch gekennzeichnet, dass** die Größe der Glaspartikel des Glaspulvers < 100 µm, < 50 µm, < 20 µm, vorzugsweise < 5 µm, besonders bevorzugt < 2 µm ist.

11. Verwendung von Glaspulvern mit antimikrobieller Glasoberfläche hergestellt nach einem Verfahren gemäß Anspruch 8 bis 10 im Lebensmittelbereich.

12. Verwendung von Glaspulvern hergestellt nach einem Verfahren gemäß Anspruch 8 bis 10 im Haushalt.

13. Verwendung von Glaspulvern hergestellt nach einem Verfahren gemäß Anspruch 8 bis 10 in Pharmazie und Biotechnologie.

14. Verwendung von Glaspulvern hergestellt nach einem Verfahren gemäß Anspruch 8 bis 10 im Bereich der Pflege.

15. Verwendung von Glaspulvern hergestellt nach einem Verfahren gemäß Anspruch 8 bis 10 im Bereich der Displays.

16. Verwendung von Glaspulvern hergestellt nach einem Verfahren gemäß Anspruch 8 bis 10 im Bereich der Medizintechnik.

17. Verwendung von Glaspulvern hergestellt nach einem Verfahren gemäß Anspruch 8 bis 10 im Bereich von Krankenhäusern und Praxen.

18. Verwendung von Glaspulvern hergestellt nach einem Verfahren gemäß Anspruch 8 bis 10 als Glasböden in Kühlgeräten, insbesondere Kühlschränken.

19. Glaskeramikpulver, wobei das Glaskeramikpulver Glaskeramikpartikel umfasst, **dadurch gekennzeichnet, dass** die Glaskeramikpartikel wenigstens eine der nachfolgenden Komponenten
ZnO
AgO
CuO
CeO₂
GeO₂
TeO₂
enthalten, wobei diese Komponenten in den oberflächennahen Bereichen der Glaskeramikpartikel angereichert sind, wobei die Ausgangsglaszusammensetzung der Glaskeramik in Gew.-% auf Oxidbasis aufweist:
| | |
|---|---|
| SiO₂ | 55-69 |
| Al₂O₃ | 19-25 |
| P₂O₅ | 0-1,0 |
| TiO₂ | 1,0-5,0 |
| ZrO₂ | 0,5-2,5 |
| Li₂O | 3,0-4,0 |
| Na₂O | 0-1,0 |
| K₂O | 0-0,6 |
| Σ Na₂O + K₂O | 0,2-1,0 |
| MgO | 0-1,5 |
| CaO | 0-0,5 |
| SrO | 0-1,0 |
| BaO | 0-2,5 |
| Σ CaO + SrO + BaO | 0,2-3,0 |
| ZnO | 1.0-2,2 |

20. Glaskeramikpulver, wobei das Glaskeramikpulver Glaskeramikpartikel umfasst, **dadurch gekennzeichnet, dass** die Glaskeramikpartikel wenigstens eine der nachfolgenden Komponenten
ZnO
AgO
CuO
CeO₂
GeO₂
TeO₂
enthalten, wobei diese Komponenten in den oberflächennahen Bereichen der Glaskeramikpartikel angereichert sind, wobei die Ausgangsglaszusammensetzung der Glaskeramik in Gew.-% auf Oxidbasis aufweist:
| | |
|---|---|
| SiO₂ | 66-68 |
| Al₂O₃ | 19-25 |
| TiO₂ | 2,0-3,0 |
| ZrO₂ | 1,0-2,5 |
| Li₂O | 3,0-4,0 |
| Na₂O | 0-1,0 |
| K₂O | 0-0,6 |
| Σ Na₂O + K₂O | 0,2-1,0 |
| MgO | 0-1,5 |
| CaO | 0-0,5 |
| SrO | 0-1,0 |
| BaO | 0-1,0 |
| ZnO | 0-2.0 |

21. Glaskeramikpulver gemäß Anspruch 19 oder 20, **dadurch gekennzeichnet, dass** die oberflächennahen Bereiche die Komponenten in einer Konzentration > 100 ppm und < 8 Gew.-% enthalten.

22. Glaskeramikpulver gemäß einem der Ansprüche 19 bis 21, **dadurch gekennzeichnet, dass** die Größe der Partikel des Glaskeramikpulvers < 100 µm, < 50 µm, < 20 µm, vorzugsweise < 5 µm, besonders bevorzugt < 2 µm ist.

23. Glaskeramikpulver nach einem der Ansprüche 19 bis 22, **dadurch gekennzeichnet, dass** Partikel mit einer Größe < 5 µm durch Attrio-Mahlung der Glaskeramik in Wasser erhalten werden können.

24. Verfahren zur Herstellung von antimikrobiellen Glaskeramikpulvern umfassend die nachfolgenden Schritte:
es wird ein Ausgangsglas erschmolzen,
danach wird das Ausgangsglas zu einer Glaskeramik keramisiert
danach wird die Glaskeramik zu Glaskeramikpartikeln zerkleinert,
die Glaskeramikpartikel werden mit einer oder mehrerer der nachfolgenden Ionen
Zn
Ag
Cu
Ce
Ge
Te
durch einen oder mehrere nachfolgende Verfahrensschritte
- Ionenaustausch in Salzbädern
- Aufbringen von metallhaltigen Lösungen und Suspensionen
- Einbrennen von metallhaltigen Lösungen und Suspensionen
- Einbrennen von salzhaltigen Pasten
- Zerkleinern der Glaskeramik zu Glaskeramikpartikeln in metallhaltigen, insbesondere wässrigen Lösungen und Suspensionen
antimikrobiell ausgerüstet.

25. Verfahren nach Anspruch 24, **dadurch gekennzeichnet, dass**
die in den Schmelzen, Lösungen und Suspensionen enthaltenen Zusammensetzungen, die Träger von Ag, Zn oder Cu sind, eine oder mehrere der nachfolgenden Verbindungen umfassen:
Ag-Chlorid
Ag-Nitrat
Ag-Oxid
Ag
Ag-organische Verbindungen
Ag-anorganische Verbindungen
Cu-Oxid
Zn-Oxid
Zn-Nitrat
Zn-Chlorid
Cu-, Zn-organische Verbindungen
Cu-, Zn-anorganische Verbindungen
sowie sämtliche andere Verbindungen, umfassend insbesondere alle Salze von antimikrobiell wirksamen Ionen, wie z. B. Ag, Cu, Zn, Sn, die bei Raumtemperatur bzw. bis zur Temperatur der Temperung oder in der aufgebrachten Lösung bzw. Suspension stabil sind.

26. Verfahren nach Anspruch 25, **dadurch gekennzeichnet, dass** eine oder mehrere der nachfolgenden Ionen Zn, Ag, Cu, Ce, Ge in den oberflächennahen Bereichen der Glaskeramikpartikel angereichert sind.

27. Verfahren gemäß einem der Ansprüche 24 bis 26, **dadurch gekennzeichnet, dass** die Größe der Glaskeramikpartikel des Glaskeramikpulvers < 100 µm, < 50 µm, < 20 µm, vorzugsweise < 5 µm, besonders bevorzugt < 2 µm ist.

28. Verwendung von Glaskeramikpulvern mit antimikrobieller Glaskeramikoberfläche hergestellt nach einem Verfahren gemäß Anspruch 24 bis 27 im Lebensmittelbereich.

29. Verwendung von Glaskeramikpulvern hergestellt nach einem Verfahren gemäß Anspruch 24 bis 27 im Haushalt.

30. Verwendung von Glaskeramikpulvern hergestellt nach einem Verfahren gemäß Anspruch 24 bis 27 in Pharmazie und Biotechnologie.

31. Verwendung von Glaskeramikpulvern hergestellt nach einem Verfahren gemäß Anspruch 24 bis 27 im Bereich der Pflege.

32. Verwendung von Glaskeramikpulvern hergestellt nach einem Verfahren gemäß Anspruch 24 bis 27 im Bereich der Displays.

33. Verwendung von Glaskeramikpulvern hergestellt nach einem Verfahren gemäß Anspruch 24 bis 27 im Bereich der Medizintechnik.

34. Verwendung von Glaskeramikpulvern hergestellt nach einem Verfahren gemäß Anspruch 24 bis 27 im Bereich von Krankenhäusern und Praxen.

35. Verwendung von Glaskeramikpulvern hergestellt nach einem Verfahren gemäß Anspruch 24 bis 27 als Glasböden in Kühlgeräten, insbesondere Kühlschränken.

## Claims

1. A water-insoluble silicate glass powder, the silicate glass powder having glass particles with the following composition in weight-percent on an oxide basis:
| | |
|---|---|
| SiO₂ | 20-80 |
| Na₂O | 5-30 |
| K₂O | 0-5 |
| P₂O₅ | 0-15 |
| B₂O₃ | 0-10 |
| CaO | 4-30 |
| MgO | 0-8 |
| Al₂O₃ | 0-7 |
| Fe₂O₃ | 0-2 |
as well as typical refining agents in typical quantities,
**characterized in that** the glass particles contain at least one of the following components
ZnO
AgO
CuO
CeO₂
GeO₂
TeO₂
these components being enriched in the surface-proximal areas of the glass particles.

2. The water-insoluble, antimicrobial silicate glass powder according to Claim 1, **characterized in that** the surface-proximal areas contain the components in a concentration > 100 ppm and < 8 weight-percent.

3. The water-insoluble antimicrobial silicate glass powder according to one of Claims 1 through 2, **characterized in that** the composition has, in weight-percent on an oxide basis:
| | |
|---|---|
| SiO₂ | 38-65 |
| Na₂O | 10-30 |
| P₂O₅ | 4-15 |
| B₂O₃ | 0-3 |
| CaO | 10-30. |

4. The water-insoluble antimicrobial silicate glass powder according to one of Claims 1 through 2, **characterized in that** the composition has, in weight-percent on an oxide basis:
| | |
|---|---|
| SiO₂ | 50-80 |
| Al₂O₃ | 0-1 |
| CaO | 4-15 |
| MgO | 0-8 |
| Fe₂O₃ | 0-2 |
| Na₂O | 5-20 |
| K₂O | 0-2. |

5. The water-insoluble, antimicrobial silicate glass powder according to one of Claims 1 through 4, **characterized in that** the size of the particles of the glass powder is <100 µm, < 50 µm, < 20 µm, preferably < 5 µm, especially preferably <2 µm.

6. The water-insoluble, antimicrobial silicate glass powder according to Claim 5, **characterized in that** particles having a size less than 5 µm may be obtained by attrition grinding of the glass in water.

7. A method for producing water-insoluble antimicrobial silicate glass powders comprising the following steps:
a silicate glass having the following composition in weight-percent on an oxide basis:
| | |
|---|---|
| SiO₂ | 20-80 |
| Na₂O | 5-30 |
| K₂O | 0-5 |
| P₂O₅ | 0-15 |
| B₂O₃ | 0-10 |
| CaO | 4-30 |
| MgO | 0-8 |
| Al₂O₃ | 0-7 |
| Fe₂O₃ | 0-2 |
and typical refining agents in typical quantities is melted, the silicate glass is then pulverized to form glass particles, the glass particles are equipped as antimicrobial using one or more of the following ions
Zn
Ag
Cu
Ce
Ge
Te
by one or more of the following method steps
- ion exchange in salt baths
- application of solutions and suspensions containing metal
- firing on pastes containing salts
- firing on solutions and suspensions containing metal
- pulverizing the silicate glass to form glass particles in solutions and suspensions containing metal, particularly aqueous solutions and suspensions.

8. The method according to Claim 7, **characterized in that** the compositions contained in the melts, solutions, and suspensions, which are carriers of silver, zinc, or copper, comprise one or more of the following compounds:
silver chloride
silver nitrate
silver oxide
silver
silver-organic compounds
silver-inorganic compounds
copper oxide
zinc oxide
zinc nitrate
zinc chloride
copper, zinc-organic compounds
copper, zinc-inorganic compounds,
as well as all other compounds, particularly comprising all salts of ions which have an antimicrobial effect, such as silver, copper, zinc, tin, which are stable at room temperature and/or up to the temperature of the annealing or in the applied solution and/or suspension.

9. The method according to Claim 8, **characterized in that** one or more of the following ions: zinc, silver, copper, cesium, germanium, are enriched in the surface-proximal areas of the glass particles.

10. The method according to one of Claims 8 through 9, **characterized in that** the size of the glass particles of the glass powder is <100 µm, < 50 µm, < 20 µm, preferably < 5 µm, especially preferably < 2 µm.

11. A use of glass powders having an antimicrobial glass surface produced according to a method according to Claims 8 through 10 in the field of food.

12. A use of glass powders having an antimicrobial glass surface produced according to a method according to Claims 8 through 10 in the household.

13. A use of glass powders having an antimicrobial glass surface produced according to a method according to Claims 8 through 10 in pharmaceuticals and biotechnology.

14. A use of glass powders having an antimicrobial glass surface produced according to a method according to Claims 8 through 10 in the field of nursing.

15. A use of glass powders having an antimicrobial glass surface produced according to a method according to Claims 8 through 10 in the field of displays.

16. A use of glass powders having an antimicrobial glass surface produced according to a method according to Claims 8 through 10 in the field of medical technology.

17. A use of glass powders having an antimicrobial glass surface produced according to a method according to Claims 8 through 10 in the field of hospitals and physicians' offices.

18. A use of glass powders having an antimicrobial glass surface produced according to a method according to Claims 8 through 10 as glass floors in cooling devices, particularly refrigerators.

19. A glass ceramic powder, the glass ceramic powder comprising glass ceramic particles, **characterized in that** the glass ceramic particles contain at least one of the following components
ZnO
AgO
CuO
CeO₂
GeO₂
TeO₂
these components being enriched in the surface-proximal areas of the glass ceramic particles, the starting glass composition of the glass ceramic having, in weight-percent on an oxide basis:
| | |
|---|---|
| SiO₂ | 55-69 |
| Al₂O₃ | 19-25 |
| P₂O₅ | 0-1.0 |
| TiO₂ | 1.0-5.0 |
| ZrO₂ | 0.5-2.5 |
| Li₂O | 3.0-4.0 |
| Na₂O | 0-1.0 |
| K₂O | 0-0.6 |
| Σ Na₂O+K₂O | 0.2-1.0 |
| MgO | 0-1.5 |
| CaO | 0-0.5 |
| SrO | 0-1.0 |
| BaO | 0-2.5 |
| Σ CaO+SrO+BaO | 0.2-3.0 |
| ZnO | 1.0-2.2. |

20. A glass ceramic powder, the glass ceramic powder comprising glass ceramic particles, **characterized in that** the glass ceramic particles contain at least one of the following components
ZnO
AgO
CuO
CeO₂
GeO₂
TeO₂
these components being enriched in the surface-proximal areas of the glass ceramic particles, the starting glass composition of the glass ceramic having, in weight-percent on an oxide basis:
| | |
|---|---|
| SiO₂ | 66-68 |
| Al₂O₃ | 19-25 |
| TiO₂ | 2.0-3.0 |
| ZrO₂ | 1.0-2.5 |
| Li₂O | 3.0-4.0 |
| Na₂O | 0-1.0 |
| K₂O | 0-0.6 |
| Σ Na₂O + K₂O | 0.2-1.0 |
| MgO | 0-1.5 |
| CaO | 0-0.5 |
| SrO | 0-1.0 |
| BaO | 0-1.0 |
| ZnO | 0-2.0 |

21. The glass ceramic according to Claim 19 or 20, **characterized in that** the surface-proximal areas contain the components in a concentration > 100 ppm and < 8 weight-percent.

22. The glass ceramic powder according to one of Claims 19 through 21, **characterized in that** the size of the particles of the glass powder is <100 µm, < 50 µm, < 20 µm, preferably < 5 µm, especially preferably < 2 µm.

23. The glass ceramic powder according one of Claims 19 through 22, **characterized in that** particles having a size < 5 µm may be obtained by attrition grinding of the glass ceramic and water.

24. A method for producing antimicrobial glass ceramic powders comprising the following steps:
a starting glass is melted,
the starting glass is then ceramicized to form a glass ceramic,
the glass ceramic is then pulverized to form glass ceramic particles,
the glass ceramic particles are equipped as antimicrobial using one or more of the following ions
Zn
Ag
Cu
Ce
Ge
Te
by one or more of the following method steps
- ion exchange in salt baths
- application of solutions and suspensions containing metal
- firing on pastes containing salts
- firing on solutions and suspensions containing metal
- pulverizing the silicate glass to form glass particles in solutions and suspensions containing metal, particularly aqueous solutions and suspensions.

25. The method according to Claim 24, **characterized in that** the compositions contained in the melts, solutions, and suspensions, which are carriers of silver, zinc, or copper, comprise one or more of the following compounds:
silver chloride
silver nitrate
silver oxide
silver
silver-organic compounds
silver-inorganic compounds
copper oxide
zinc oxide
zinc nitrate
zinc chloride
copper, zinc-organic compounds
copper, zinc-inorganic compounds,
as well as all other compounds, particularly comprising all salts of ions which have an antimicrobial effect, such as silver, copper, zinc, tin, which are stable at room temperature and/or up to the temperature of the annealing or in the applied solution and/or suspension.

26. The method according to Claim 25, **characterized in that** one or more of the following ions: zinc, silver, copper, cesium, germanium, are enriched in the surface-proximal areas of the glass ceramic particles.

27. The method according to one of Claims 24 through 26, **characterized in that** the size of the glass ceramic particles of the glass ceramic powder is <100 µm, < 50 µm, < 20 µm, preferably < 5 µm, especially preferably < 2 µm.

28. A use of glass ceramic powders having an antimicrobial glass ceramic surface produced according to a method according to Claims 24 through 27 in the field of food.

29. A use of glass ceramic powders produced according to a method according to Claims 24 through 27 in the household.

30. A use of glass ceramic powders produced according to a method according to Claims 24 through 27 in pharmaceuticals and biotechnology.

31. A use of glass ceramic powders produced according to a method according to Claims 24 through 27 in the field of nursing.

32. A use of glass ceramic powders produced according to a method according to Claims 24 through 27 in the field of displays.

33. A use of glass ceramic powders produced according to a method according to Claims 24 through 27 in the field of medical technology.

34. A use of glass ceramic powders having produced according to a method according to Claims 24 through 27 in the field of hospitals and physicians' offices.

35. A use of glass ceramic powders having produced according to a method according to Claims 24 through 27 as glass floors in cooling devices, particularly refrigerators.

## Revendications

1. Poudre de verre silicaté non hydrosoluble, dans laquelle la poudre de verre silicaté contient des particules de verre ayant la composition suivante, en pourcentage en poids sur la base du poids d'oxyde :
| | |
|---|---|
| SiO₂ | 20-80 |
| Na₂O | 5-30 |
| K₂O | 0-5 |
| P₂O₅ | 0-15 |
| B₂O₃ | 0-10 |
| CaO | 4-30 |
| MgO | 0-8 |
| Al₂O₃ | 0-7 |
| Fe₂O₃ | 0-2 |
ainsi que des agents d'affinage usuels dans les quantités habituelles, **caractérisée en ce que** les particules de verre contiennent au moins un des composants suivants :
ZnO
AgO
CuO
CeO₂
GeO₂
TeO₂
lesquels composants sont accumulés dans les zones proches de la surface des particules de verre.

2. Poudre de verre silicaté non hydrosoluble antimicrobienne selon la revendication 1, **caractérisée en ce que** les zones proches de la surface contiennent les composants dans une concentration > 100 ppm et < 8 % en poids.

3. Poudre de verre silicaté antimicrobienne non hydrosoluble selon l'une des revendications 1 à 2, **caractérisée en ce que** la composition contient, en pourcentage en poids sur la base de l'oxyde :
| | |
|---|---|
| SiO₂ | 38-65 |
| Na₂O | 10-30 |
| P₂O₅ | 4-15 |
| B₂O₃ | 0-3 |
| CaO | 10-30. |

4. Poudre de verre silicaté antimicrobienne non hydrosoluble selon l'une des revendications 1 à 2, **caractérisée en ce que** la composition contient, en pourcentage en poids sur la base du poids d'oxyde :
| | |
|---|---|
| SiO₂ | 50-80 |
| Al₂O₃ | 0-1 |
| CaO | 4-15 |
| MgO | 0-8 |
| Fe₂O₃ | 0-2 |
| Na₂O | 5-20 |
| K₂O | 0-2. |

5. Poudre de verre silicaté antimicrobienne non hydrosoluble selon l'une des revendications 1 à 4, **caractérisée en ce que** la taille des particules de la poudre de verre est inférieure à 100 µm, inférieure à 50 µm, inférieure à 20 µm, de préférence inférieure à 5 µm et en particulier inférieure à 2 µm.

6. Poudre de verre silicaté antimicrobienne non hydrosoluble selon la revendication 5, **caractérisée en ce que** des particules ayant une taille inférieure à 5 µm peuvent être obtenues par attrition du verre dans l'eau.

7. Procédé pour la fabrication de poudres de verre silicaté antimicrobiennes non hydrosolubles, comprenant les étapes suivantes :
fusion d'un verre silicaté ayant la composition suivante, en pourcentage en poids sur la base du poids d'oxyde :
| | |
|---|---|
| SiO₂ | 20-80 |
| Na₂O | 5-30 |
| K₂O | 0-5 |
| P₂O₅ | 0-15 |
| B₂O₃ | 0-10 |
| CaO | 4-30 |
| MgO | 0-8 |
| Al₂O₃ | 0-7 |
| Fe₂O₃ | 0-2 |
et contenant les agents d'affinage usuels dans les quantités habituelles, puis broyage du verre silicaté en particules de verre,
enrichissement des particules de verre en vue de leur conférer une action antimicrobienne avec un ou plusieurs des ions suivants :
Zn
Ag
Cu
Ce
Ge
Te
par une ou plusieurs des étapes de procédé suivantes :
- échange d'ions dans des bains de sel
- application de solutions et suspensions contenant les métaux
- application et cuisson de pâtes contenant des sels
- cuisson de solutions et suspensions contenant des métaux,
- broyage du verre silicaté pour obtenir des particules de verre dans des solutions et suspensions contenant du métal, en particulier des solutions aqueuses.

8. Procédé selon la revendication 7, **caractérisé en ce que** les compositions véhicules des ions Ag, Zn ou Cu contenues dans les matières fondues, solutions ou suspensions comprennent un ou plusieurs des composés suivants :
chlorure d'argent
nitrate d'argent
oxyde d'argent
argent
composés d'argent organiques
composés d'argent anorganiques
oxyde de cuivre
oxyde de zinc
nitrate de zinc
chlorure de zinc
composés de cuivre ou de zinc organiques
composés de cuivre ou de zinc anorganiques
et tous les autres composés, en particulier tous les sels d'ions ayant une action antimicrobienne, par exemple Ag, Cu, Zn, Sn, qui sont stables à température ambiante ou jusqu'à la température de trempe ou dans la solution ou la suspension appliquée.

9. Procédé selon la revendication 8, **caractérisé en ce qu'**un ou plusieurs des ions Zn, Ag, Cu, Co, Ge sont accumulés dans les zones proches de la surface des particules de verre.

10. Procédé selon l'une des revendications 8 à 9, **caractérisé en ce que** la taille des particules de verre dans la poudre de verre est inférieure à 100 µm, inférieure à 50 µm, inférieure à 20 µm, de préférence inférieure à 5 µm et en particulier inférieure à 2 µm.

11. Utilisation de poudres de verre à surface vitreuse antimicrobienne fabriquées par un procédé selon la revendication 8 à 10 dans le domaine des produits alimentaires.

12. Utilisation de poudres de verre fabriquées par un procédé selon la revendication 8 à 10 pour des usages ménagers.

13. Utilisation de poudres de verre fabriquées par un procédé selon les revendications 8 à 10 en pharmacie et biotechnologie.

14. Utilisation de poudres de verre fabriquées par un procédé selon les revendications 8 à 10 dans le domaine des soins.

15. Utilisation de poudres de verre fabriquées par un procédé selon les revendications 8 à 10 dans le domaine des systèmes d'affichage.

16. Utilisation de poudres de verre fabriquées par un procédé selon les revendications 8 à 10 dans le domaine de la technique médicale.

17. Utilisation de poudres de verre fabriquées par un procédé selon les revendications 8 à 10 dans le domaine des hôpitaux et cabinets médicaux.

18. Utilisation de poudres de verre fabriquées par un procédé selon les revendications 8 à 10 comme plateaux en verre dans des appareils réfrigérants, en particulier des réfrigérateurs.

19. Poudre de vitrocéramique, laquelle poudre de vitrocéramique contient des particules de vitrocéramique, **caractérisé en ce que** les particules de vitrocéramique contiennent au moins un des composants suivants :
ZnO
AgO
CuO
CeO₂
GeO₂
TeO₂
lesquels composants sont accumulés dans les zones proches de la surface des particules de vitrocéramique, la composition du verre utilisé pour produire la vitrocéramique étant, en pourcentage en poids sur la base de l'oxyde :
| | |
|---|---|
| SiO₂ | 55-69 |
| Al₂O₃ | 19-25 |
| P₂O₅ | 0-1,0 |
| TiO₂ | 1,0-5,0 |
| ZrO₂ | 0,5-2,5 |
| Li₂O | 3,0-4,0 |
| Na₂O | 0-1,0 |
| K₂O | 0-0,6 |
| Σ Na₂O+K₂O | 0,2-1,0 |
| MgO | 0-1,5 |
| CaO | 0-0,5 |
| SrO | 0-1,0 |
| BaO | 0-2,5 |
| Σ CaO+SrO+BaO | 0,2-3,0 |
| ZnO | 1,0-2,2 |

20. Poudre de vitrocéramique, laquelle poudre de vitrocéramique contient des particules de vitrocéramique, **caractérisée en ce que** les particules de vitrocéramique contiennent au moins un des composants suivants :
ZnO
AgO
CuO
CeO₂
TeO₂
lesquels composants sont accumulés dans les zones proches de la surface des particules de vitrocéramique, la composition du verre servant à la production de la vitrocéramique étant, en pourcentage en poids par rapport au poids d'oxyde :
| | |
|---|---|
| SiO₂ | 66-68 |
| Al₂O₃ | 19-25 |
| TiO₂ | 2,0-3,0 |
| ZrO₂ | 1,0-2,5 |
| Li₂O | 3,0-4,0 |
| Na₂O | 0-1,0 |
| K₂O | 0-0,6 |
| Σ Na₂O+K₂O | 0,2-1,0 |
| MgO | 0-1,5 |
| CaO | 0-0,5 |
| SrO | 0-1,0 |
| BaO | 0-1,0 |
| ZnO | 0-2,0 |

21. Poudre de vitrocéramique selon la revendication 19 ou 20, **caractérisée en ce que** les zones proches de la surface contiennent les composants dans une concentration > 100 ppm et < 8 % en poids.

22. Poudre de vitrocéramique selon l'une des revendications 19 à 21, **caractérisée en ce que** la taille des particules de la poudre de vitrocéramique est inférieure à 100 µm, inférieure à 50 µm, inférieure à 20 µm, de préférence inférieure à 5 µm et en particulier inférieure à 2 µm.

23. Poudre de vitrocéramique selon l'une des revendications 19 à 22, **caractérisée en ce que** des particules ayant une taille inférieure à 5 µm peuvent être obtenues par attrition de la vitrocéramique dans l'eau.

24. Procédé pour la fabrication de poudres de vitrocéramique antimicrobiennes, comprenant les étapes suivantes :
fusion d'un verre servant de matière première,
céramisation du verre servant de matière première pour obtenir une vitrocéramique,
broyage de la vitrocéramique en particules de vitrocéramique,
enrichissement des particules de vitrocéramique en vue de leur conférer une action antimicrobienne avec un ou plusieurs des ions suivants :
Zn
Ag
Cu
Ce
Ge
Te
par une ou plusieurs des étapes de procédé suivantes :
- échange d'ions dans des bains de sel
- application de solutions et suspensions contenant les métaux
- application et cuisson de pâtes contenant des sels
- cuisson de solutions et suspensions contenant des métaux,
- broyage de la vitrocéramique pour obtenir des particules de vitrocéramique dans des solutions et suspensions contenant du métal, en particulier des solutions aqueuses.

25. Procédé selon la revendication 24, **caractérisé en ce que** les compositions véhicules des ions Ag, Zn ou Cu contenues dans les matières fondues, solutions ou suspensions comprennent un ou plusieurs des composés suivants :
chlorure d'argent
nitrate d'argent
oxyde d'argent
argent
composés d'argent organiques
composés d'argent anorganiques
oxyde de cuivre
oxyde de zinc
nitrate de zinc
chlorure de zinc
composés de cuivre ou de zinc organiques
composés de cuivre ou de zinc anorganiques
et tous les autres composés, en particulier tous les sels d'ions ayant une action antimicrobienne, par exemple Ag, Cu, Zn, Sn, qui sont stables à température ambiante ou jusqu'à la température de trempe ou dans la solution ou la suspension appliquée.

26. Procédé selon la revendication 25, **caractérisé en ce qu'**un ou plusieurs des ions Zn, Ag, Cu, Co, Ge sont accumulés dans les zones proches de la surface des particules de vitrocéramique.

27. Procédé selon l'une des revendications 24 à 26, **caractérisé en ce que** la taille des particules de vitrocéramique est inférieure à 100 µm, inférieure à 50 µm, inférieure à 20 µm, de préférence inférieure à 5 µm et en particulier inférieure à 2 µm.

28. Utilisation de poudres de vitrocéramique ayant une surface en vitrocéramique antimicrobienne fabriquées par un procédé selon les revendications 24 à 27 dans le domaine des produits alimentaires.

29. Utilisation de poudres de vitrocéramique fabriquées par un procédé selon les revendications 24 à 27 pour des usages ménagers.

30. Utilisation de poudres de vitrocéramique fabriquées par un procédé selon les revendications 24 à 27 en pharmacie et biotechnologie.

31. Utilisation de poudres de vitrocéramique fabriquées par un procédé selon les revendications 24 à 27 dans le domaine des soins.

32. Utilisation de poudres de vitrocéramique fabriquées par un procédé selon les revendications 24 à 27 dans le domaine des systèmes d'affichage.

33. Utilisation de poudres de vitrocéramique fabriquées par un procédé selon les revendications 24 à 27 dans le domaine de la technique médicale.

34. Utilisation de poudres de vitrocéramique fabriquées par un procédé selon les revendications 24 à 27 dans le domaine des hôpitaux et cabinets médicaux.

35. Utilisation de poudres de vitrocéramique fabriquées par un procédé selon les revendications 24 à 27 comme plateaux en vitrocéramique dans des appareils réfrigérants, en particulier des réfrigérateurs.
